# EUROPÄISCHE PATENTSCHRIFT

(11) **EP 0 882 387 B1**
(45) Veröffentlichungstag und Bekanntmachung des Hinweises auf die Patenterteilung: **09.10.2002**
(21) Anmeldenummer: 98109283.6
(22) Anmeldetag: 22.05.1998
(51) Int. Cl.: A01D 34/71

(54) **Mähgehäuse**
Cutting chamber
Chambre de coupe

(30) Priorität: 02.06.1997 US 867364
(43) Veröffentlichungstag der Anmeldung: 09.12.1998
(73) Patentinhaber: DEERE & COMPANY, Moline, Illinois 61265-8098 (US)
(72) Erfinder: Benway, Randy Edward, Horicon, WI 53032 (US)
(74) Vertreter: Lau-Loskill, Philipp, Dipl.-Phys.

(56) Entgegenhaltungen:
- DE-A- 2 331 508
- US-A- 3 503 194
- US-A- 3 797 214
- US-A- 4 041 682
- US-A- 4 726 178

## Beschreibung

Die Erfindung betrifft ein Mähgehäuse mit den Merkmalen des Oberbegriffs des Patentanspruchs 1.

Konventionelle Mäher weisen ein Mähgehäuse auf, innerhalb dessen sich Mähmesser drehen, um Vegetationen und Gras zu schneiden. Die Mähmesser haben voreilende Schnittkanten und nachlaufende nach oben gebogene Flügelbereiche, die eine innerhalb des Mähers nach oben gerichtete Strömung erzeugen, um das Schnittgut nach oben und radial nach außen von den Messern weg zu bewegen. Das Mähgehäuse umschließt gewöhnlich das Schnittgut und bewirkt, daß das Schnittgut mit den Messern zirkuliert. Einige Mäher weisen eine Öffnung in der Seite des Mähgehäuses auf, durch die von den Messern abgeschnittene Grasschnitzel ausgeworfen werden. Die durch die rotierenden Messer erzeugte Luftströmung bläst das Schnittgut durch die Seitenöffnung hinaus. Seitenauswurfmäher weisen normalerweise einen Auswurfkanal auf, der sich von der Seitenöffnung aus seitlich nach außen und unten erstreckt, um das Schnittgut abwärts auf die Grasnabe längsseits des Mähers zu leiten. Derartige Auswurfkanäle sind häufig durch einen Scharniermechanismus an dem Mähgehäuse befestigt, welcher ein Ausschwenken des Auswurfkanals nach oben ermöglicht, wenn der Auswurfkanal gegen ein Hindernis stößt, beispielsweise beim Mähen entlang eines Gebäudes, eines Zauns oder einer Baumreihe. Dieses Ausschwenken des Auswurfkanals dient der Verhinderung von Beschädigungen des Auswurfkanals und der Hindernisse.

Ein anderer Mäher-Typ bläst das Schnittgut aus dem Mähgehäuse in einen vom Mähfahrzeug getragenen Sack oder Behälter. Einige dieser Auffangmäher enthalten eine Öffnung auf der Oberwandung des Mähgehäuses, durch die Schnittgut ausgestoßen wird. Das Schnittgut wird durch den aufwärtsgerichteten Luftstrom, der durch die Flügel der Mähmesser erzeugt wird, nach oben durch die Öffnung in der Oberwandung des Mähgehäuses ausgeworfen. Das aus der Öffnung austretende Schnittgut hat eine relativ hohe Geschwindigkeit, da sich die Öffnung unmittelbar oberhalb des Mähmessers befindet. Jedoch muß das Mähgut einen relativ langen Weg durch eine Leitung bis zum am hinteren Ende des Fahrzeugs getragenen Behälter zurücklegen. Einige Auffangmäher enthalten eine Gebläseanbaueinrichtung mit einem angetriebenen Gebläseflügelmechanismus, welches das Durchblasen des Schnittguts durch die Leitung zu einem Auffangsack oder einem anderen am hinteren Fahrzeugende befestigten Behälter unterstützt.

Einige der oben beschriebenen Auffangmäher lassen sich zwischen einer Auffangbetriebsweise und einer Seitenauswurfbetriebsweise umrüsten. Um den Mäher von einer Auffangbetriebsweise in eine Seitenauswurfbetriebsweise umzurüsten entfernt die Bedienungsperson eine Leitung- oder eine Gebläseanbaueinrichtung von der Mähgehäuseöffnung. Während die Leitungs- oder Gebläseanbaueinrichtung entfernt ist, ist gewöhnlich eine Auswurfklappe nach unten geschwenkt, um die Öffnung in der Oberwandung des Mähgehäuses zu bedecken. Die Öffnung in dem Mähgehäuse erstreckt sich nach unten in die Seitenwandung des Mähgehäuses. Dieser seitliche Bereich der Öffnung ist gewöhnlich durch die Anwesenheit der Leitungs- oder Gebläseanbaueinrichtung verschlossen, er ist jedoch offen, wenn die Leitungs- oder Gebläseanbaueinrichtung entfernt wurde. Die Auswurfklappe, die nach der Entfernung der Leitungs- oder Gebläseanbaueinrichtung nach unten geschwenkt ist, erstreckt sich seitlich nach außen und unten von der Seitenöffnung weg. Der äußere Bereich der Auswurfklappe bewirkt, daß das ausgeworfene Schnittgut durch die Seitenöffnung abwärts auf die Grasnabe längsseits des Mähgehäuses gelenkt wird. Solche Auswurfklappen werden gewöhnlich in eine untere Stellung vorgespannt, so daß sie nach unten schwenken und die obere Öffnung schließen, sofern die Leitungs- oder Gebläseanbaueinrichtung entfernt ist. Der Vorspanner ist gewöhnlich eine Feder und ermöglicht es der Auswurfklappe, auch nach oben auszuschwenken, wenn die Auswurfklappe während des Mähbetriebs gegen ein Hindernis stößt. Wenn die Auswurfklappe infolge des Auftreffens eines Hindernisses nach oben schwenkt, ist die Öffnung in der oberen Wandung des Mähgehäuses wenigstens teilweise unbedeckt. Hierdurch werden in unerwünschter Weise die rotierenden Messer freigelegt, und das Schnittgut und anderes Material kann auf einer aufwärts gerichteten Wurflinie aus dem Mähgehäuse austreten.

Es ist daher wünschenswert ein Mähgehäuse bereitzustellen, welches eine Öffnung in der Oberwandung und der Seitenwandung enthält, die für den Mähbetrieb in einem Auffangmodus zur Aufnahme einer Leitungs- oder Gebläseanbaueinrichtung angepaßt ist. Es ist wünschenswert, daß sich ein solches Mähgehäuse für einen Seitenauswurfmodus umrüsten läßt. Es ist wünschenswert, solch einen Mäher mit einem Auswurfkanal oder einer Auswurfklappe zu versehen, welche im Seitenauswurfmodus das Schnittgut abwärts auf die Grasnabe leitet und welche ausschwenken kann, wenn die Auswurfklappe gegen ein Hindernis stößt, so daß sich Beschädigungen der Auswurfklappe und des Hindernisses minimieren lassen. Es ist bei einem solchen Mäher desweiteren wünschenswert, es der Auswurfklappe zu ermöglichen, in einer Weise auszuschwenken, bei der das rotierende Messer nicht freigelegt wird.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die vorliegende Erfindung stellt ein Mähgehäuse mit einem Verrieglungsmechanismus für eine Abdeckklappe bereit, die eine Öffnung des Mähgehäuses bedeckt. Die Öffnung enthält einen oberen Bereich, der in der Oberwandung des Mähgehäuses unmittelbar oberhalb der Bahn des Mähmessers ausgebildet ist, und vorzugsweise einen seitlichen Bereich, der in der Seitenwandung des Mähgehäuses ausgebildet ist. Eine Leitungsoder Gebläseanbaueinrichtung ist an dem Mähgehäuse befestigbar, um Schnittgut aus dem oberen Bereich der Öffnung zu empfangen. Sie dient dazu, das Schnittgut in einen Sack oder einen anderen an der Fahrzeughinterseite getragenen Behälter zu lenken. Bei montierter Leitungs- oder Gebläseanbaueinrichtung ist der seitliche Bereich der Öffnung durch Teile der Leitungs- oder Gebläseanbaueinrichtung verschlossen oder bedeckt. Wenn die Leitungs- oder Gebläseanbaueinrichtung entfernt wurde, schwenkt eine Abdeckklappe abwärts, um den oberen Bereich der Öffnung zu bedecken. Der seitliche Bereich der Öffnung bleibt dabei offen und erlaubt es, daß das Schnittgut in einem Seitenauswurfbetrieb seitlich ausgestoßen wird. Ein Seitenauswurfkanal oder eine Seitenauswurfklappe ist vorgesehen, um seitlich ausgeworfenes Schnittgut im wesentlichen abwärts auf die Grasnabe zu leiten.

Der Verriegelungsscharniermechanismus erlaubt es der Auswurfklappe, nach oben zu schwenken, wenn diese während des Mähens gegen ein Hindernis stößt. Der Verriegelungsmechanismus sichert jedoch die Abdeckklappe in ihrer unteren, geschlossenen Stellung auch dann, wenn die Auswurfklappe während des Betriebs nach oben schwenkt. Es wird damit das Verschwenken der Auswurfklappe beim Anstoßen an Hindernisse ermöglicht, ohne das die Mähmesser freigelegt werden, da die Abdeckklappe hierbei verriegelt bleibt. Der Verriegelungsmechanismus enthält ein Stabteil, vorzugsweise eine Drehstange, welche die Abdeckklappe und die Auswurfklappe drehbar trägt. Die Auswurfklappe wird durch eine von der Drehstange aufgenommenen Auswurfklappen-Torsionsfeder in eine untere Stellung gedrückt. Die Abdeckklappe wird durch eine ebenfalls von der Drehstange aufgenommenen Abdeckklappen-Torsionsfeder in eine geschlossene Stellung gedrückt. Ein auf dem Mähgehäuse befestigte Halterung trägt die Drehstange. Ein Nockenteil ist an der Abdeckklappe befestigt und enthält einen Fingerbereich, der gegen ein an dem Mähgehäuse montiertes Sperrglied anschlägt. In der geschlossenen Stellung wird das Fingerteil durch die Abdeckklappen-Torsionsfeder in Anschlagstellung mit dem Sperrglied gedrängt. Dieser Eingriff zwischen Fingerteil und Sperrglied verriegelt die Abdeckklappe in ihrer unteren Lage und verhindert gewöhnlich, daß die Abdeckklappe aus ihrer Schließstellung ausschwenkt. Wenn die Bedienungsperson die Abdeckklappe öffnen möchte, um beispielsweise eine Leitungs- oder Gebläseanbaueinrichtung auf dem Mähgehäuse zu montieren, so muß sie die Abdeckklappe seitlich gegen eine durch die Abdeckklappen-Torsionsfeder ausgeübte Kraft verschieben. Durch ein derartiges Verschieben der Abdeckklappe wird das Fingerteil aus der Anlage mit dem Sperrglied verschoben, so daß ein Freiraum für den Finger bereitgestellt wird und dieser am Sperrglied vorbei wandern kann. Dieser Freiraum ermöglicht es, daß die Abdeckklappe in ihre Offenstellung geschwenkt werden kann. Vorzugsweise nimmt eine schlitzförmige Öffnung das Stabteil auf und ermöglicht es, daß sich die Abdeckklappe hinsichtlich des Stabteils verschwenken läßt, sofern die Bedienungsperson die Abdeckklappe seitlich verschoben hat. Die Abdeckklappen-Torsionsfeder drückt die Abdeckklappe in ihre geschlossene Stellung sowie das Nockenteil und das Fingerteil in verriegelnden Eingriff mit dem Sperrglied.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die perspektivische Ansicht eines Mähgehäuses und einer bevorzugten Ausgestaltung eines Verriegelungsmechanismus mit einem Auswurfkanal in seiner unteren Stellung,
- Fig. 2: die perspektivische Ansicht, wie in Fig. 1, jedoch mit einem Auswurfkanal in einer angehobenen Stellung, wie sie auftritt, wenn der Auswurfkanal während des Mähens auf ein Hinderniss trifft, wobei die in Fig. 2 sichtbare Abdeckklappe sich in ihrer unteren, verriegelten Stellung befindet und die Abschnitte der Mähgehäuseöffnung durch gestrichelte Linien dargestellt sind,
- Fig. 3: die perspektivische Ansicht des Verriegelungsmechanismus von der vorderen, linken Seite aus, bei der der Auswurfkanal der besseren Klarheit halber weggelassen wurde, und
- Fig. 4: die perspektivische Ansicht des Verriegelungsmechanismus von der hinteren, linken Seite aus, bei der der Auswurfkanal der besseren Klarheit halber weggelassen wurde.

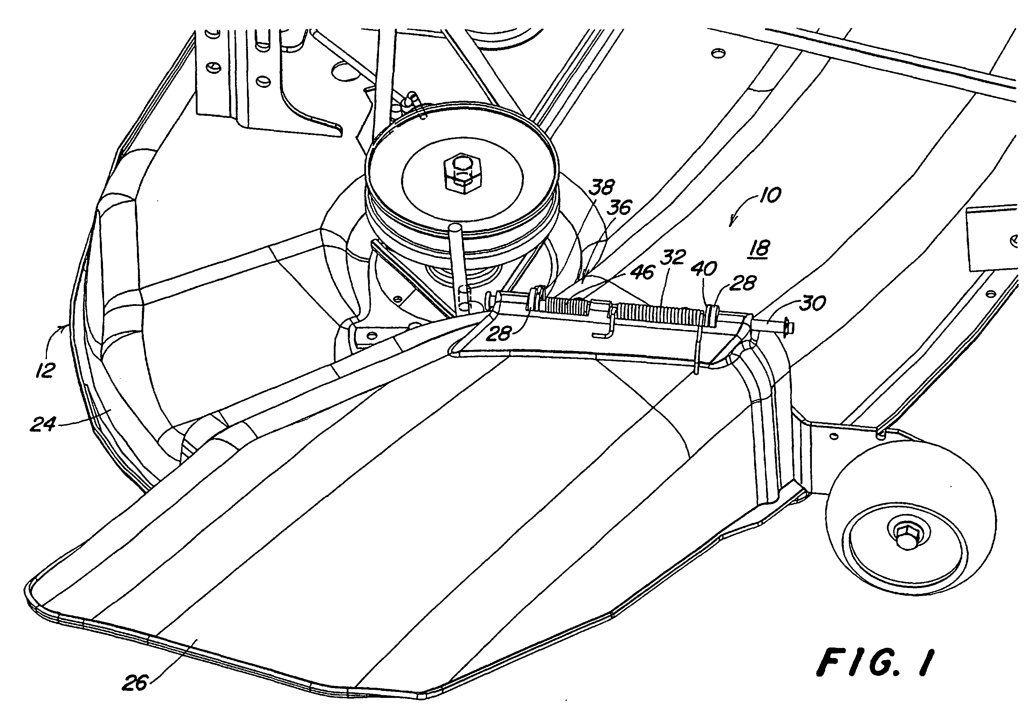

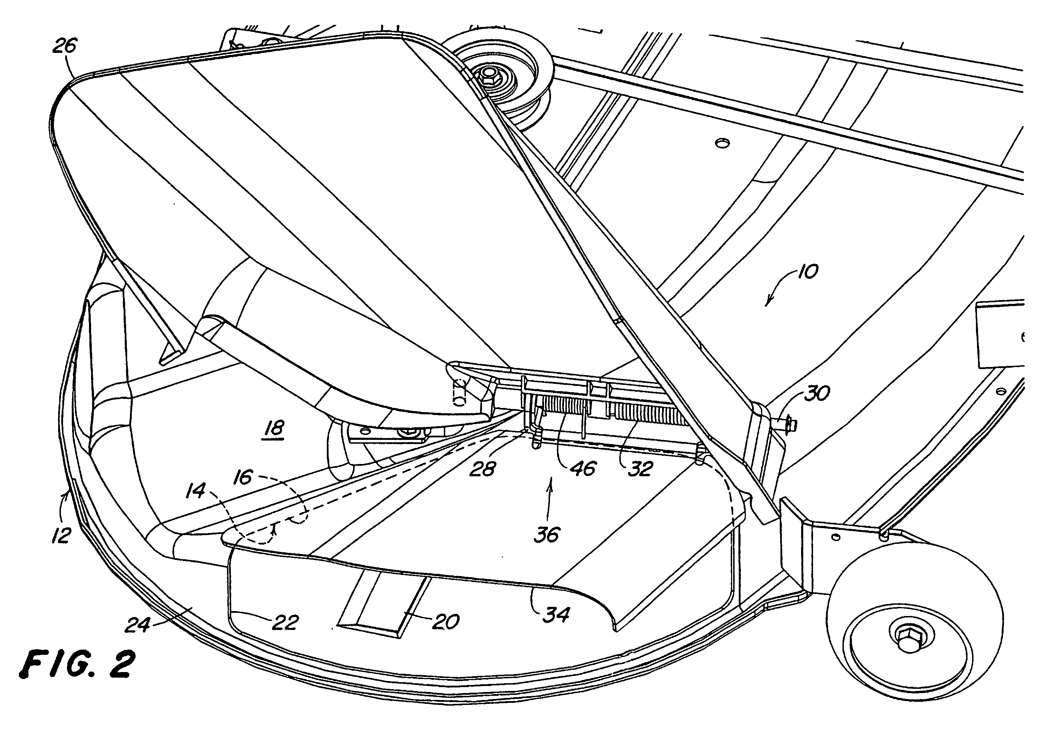

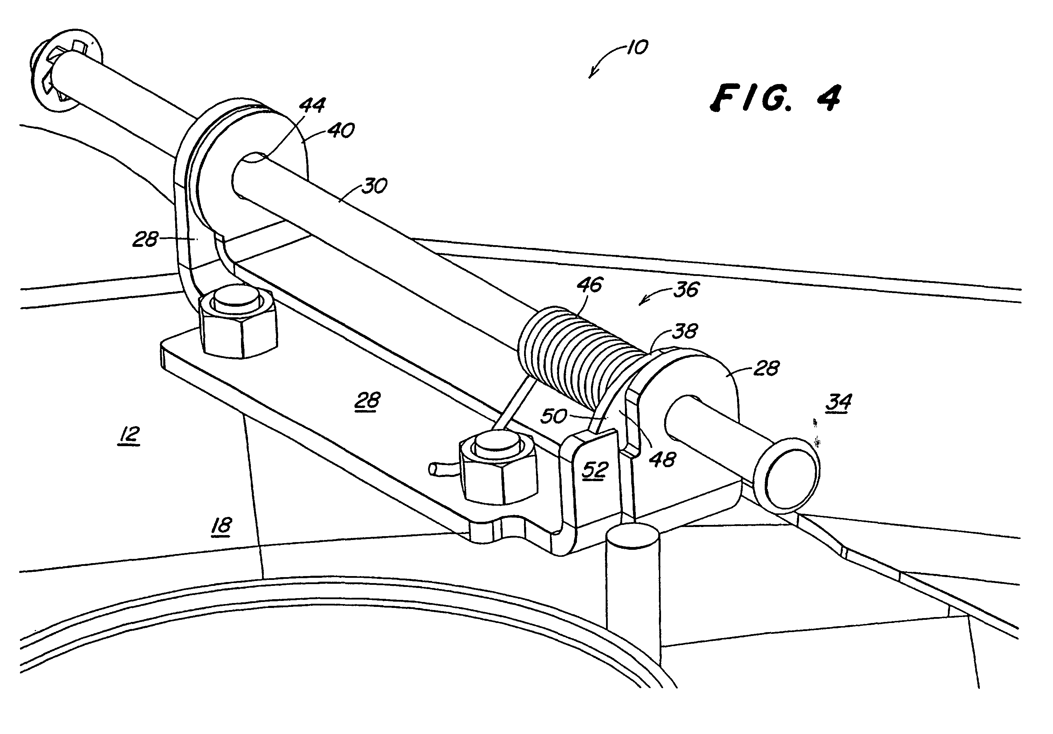

Aus den Figuren 1 bis 4 geht ein Abdeckklappenverriegelungsmechanismus 10 gemäß einer bevorzugten Ausgestaltung der Erfindung hervor. Dabei weist ein Mähgehäuse 12 eine Auswurföffnung 14 auf, wie sie am besten aus Fig. 2 hervorgeht. Die Auswurföffnung 14 enthält einen oberen Bereich 16 in der Oberwandung 18 des Mähgehäuses 12. Der obere Bereich 16 der Auswurföffnung 14 befindet sich unmittelbar über der Bahn des Messers 20, welches sich innerhalb des Mähgehäuses 12 dreht. Wenn an die Auswurföffnung 14 des Mähgehäuses 12 eine nicht gezeigte Leitungs- oder Gebläseanbaueinrichtung befestigt ist, wird von dem Mähmesser 20 Schnittgut durch die obere Öffnung 16 nach oben geblasen und dann durch die Leitung oder das Gebläse aufgefangen, um in den hinteren Auffangbehälter geleitet zu werden. Die Auswurföffnung 14 enthält desweiteren einen in der Seitenwandung 24 des Mähgehäuses 12 ausgebildeten seitlichen Bereich 22. Wenn der Mäher in seinem Seitenauswurfmodus betrieben wird, wird das Schnittgut durch den seitlichen Bereich 22 der Öffnung 14 nach außen gelenkt. Wenn die Leitungs- oder Gebläseanbaueinrichtung an dem Mähgehäuse 12 befestigt ist, bedecken oder verschließen Teile der Leitungsoder Gebläseanbaueinrichtung im wesentlichen diesen seitlichen Bereich 22 der Auswurföffnung 14.

An dem Mähgehäuse 12 ist als Auswurfkanal eine Auswurfklappe 26 schwenkbar befestigt. Eine an dem Mähgehäuse 12 befestigte U-förmige Halterung 28 trägt ein Schwenk- oder Stabteil 30, an dem die Auswurfklappe 26 verschwenkbar angebracht ist. Eine Auswurfklappen-Torsionsfeder 32 wird durch das Stabteil 30 aufgenommen und greift an der Halterung 28 sowie an der Auswurfklappe 26 an, so daß die Auswurfklappe 26 in eine untere Stellung in Richtung des Pfeils A gedrückt wird.

Wie am besten aus Fig. 2 ersichtlich, ist eine Abdeckklappe 34 vorgesehen, die ebenfalls den oberen Bereich 16 der Auswurföffnung 14 abdeckt, sofern der Mäher 12 in seinem Seitenauswurfmodus betrieben wird. Die Abdeckklappe 34 ist mittels eines Drehgelenkmechanismus oder einer Verriegelungseinrichtung 36 schwenkbar am Mähergehäuse 12 befestigt. An die Abdeckklappe 34 angeformte aufrechtstehende Halterungen 38 und 40 enthalten Lageröffnungen 42 und 44, die das Stabteil 30 aufnehmen. Eine Abdeckklappen-Torsionsfeder 46 wird durch das Stabteil 30 aufgenommen und greift an der Abdeckklappe 34 sowie an der Halterung 28 derart an, daß die Abdeckklappe 34 in Richtung des Pfeils A in ihre untere, verschlossene Stellung gedrückt wird, um den oberen Bereich 16 der Auswurföffnung 14 zu verschließen. An einer der aufrechtstehenden Halterungen 38 ist ein Nockenteil 48 mit einem Fingerbereich 50 ausgebildet, welcher für den Eingriff mit einem mit der Halterung 28 verbundenen Sperrglied 52 angepaßt ist. Die Lageröffnung 42 in dem Nockenteil 48 ist als länglicher Schlitz 54 ausgebildet. Der Schlitz 54 ermöglicht es, daß sich das Nockenteil 48 in Richtung der Pfeile B und C gegenüber dem feststehenden Stabteil 30 verschieben läßt, was im Folgenden beschrieben wird.

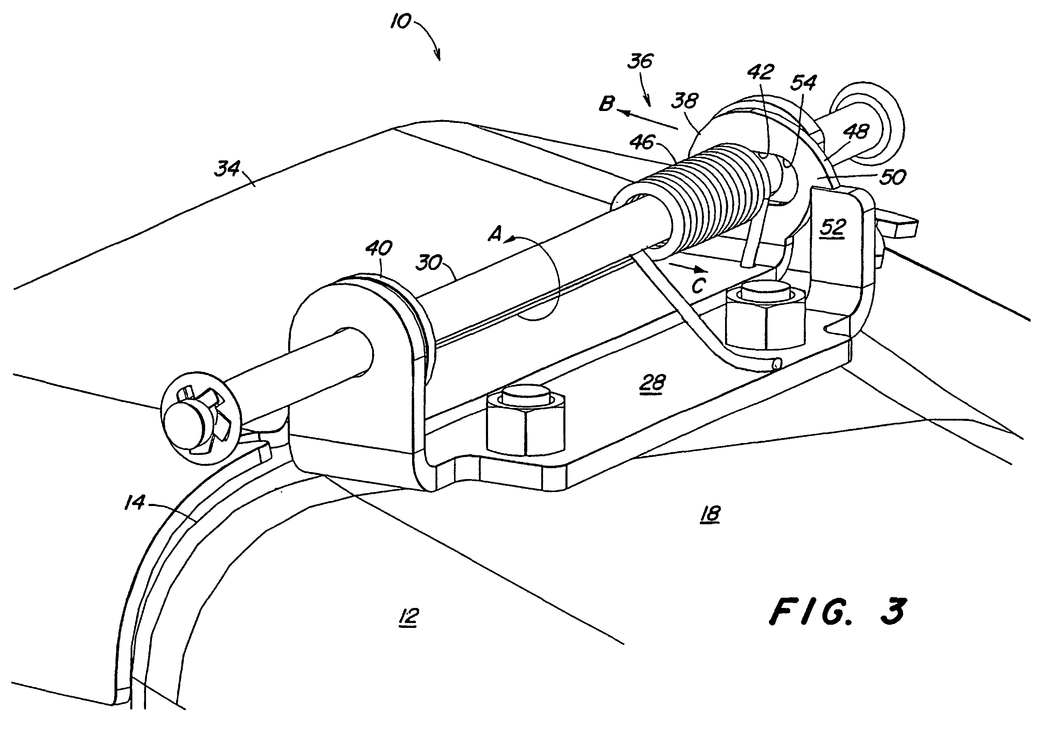

Im Folgenden wird die Funktionsweise der vorliegenden Erfindung anhand der vorstehend dargelegten bevorzugten Ausgestaltung näher beschrieben. Bei einem Seitenauswurf-Mähbetrieb drückt die Auswurfklappen-Torsionsfeder 32 die Auswurfklappe 26 in ihre in Fig. 1 dargestellte untere Stellung. Die Abdeckklappen-Torsionsfeder 46 drückt die Abdeckklappe 34 in die in Fig. 2 dargestellte Stellung, in der die Abdeckklappe 34 den oberen Bereich 16 der Auswurföffnung 14 im wesentlichen abdeckt. Die Abdeckklappen-Torsionsfeder 46 drängt die Abdeckklappe 34, sich um das Stabteil 30 in Richtung des in Fig. 3 dargestellten Pfeils A in die in Fig. 2 dargestellte geschlossene Stellung zu drehen. Die Abdeckklappen-Torsionsfeder 46 drängt die Abdeckklappe 34 auch, sich im wesentlichen linear und quer zur Ausrichtung des Stabteils 30 in Richtung des in Fig. 3 dargestellten Pfeils C zu verschieben. Die Querverschiebung der Abdeckklappe 34 bewirkt, daß sich das Nockenteil 48 in Richtung des Pfeils C in seine in Fig. 3 dargestellte Lage verschiebt. In dieser Lage stützt sich der Fingerbereich 50 auf dem Sperrglied 52 ab. Durch den Eingriff zwischen dem Fingerbereich 50 und dem Sperrglied 52 wird ein Aufwärtsschwenken des Nockenteils 48 und der Abdeckklappe 34 in ihre offene Stellung verhindert bzw. blockiert. Die Abdeckklappen-Torsionsfeder 46 drückt das Nockenteil 48 in die Richtung des Pfeils C, so daß der Fingerbereich 50 in einen verriegelten Eingriff mit dem Sperrglied 52 gedrängt wird.

Wenn die Bedienungsperson über der Auswurföffnung 14 des Mähgehäuses 12 eine Leitungs- oder Gebläseanbaueinrichtung anbauen möchte, kann sie die Auswurfklappe 26 nach oben in ihre aufgerichtete Stellung schwenken. Die Bedienungsperson kann dabei wie folgt verfahren, um die Abdeckklappe 34 zu verschwenken und den oberen Bereich 16 der Auswurföffnung 16 freizulegen. Zuerst schiebt die Bedienungsperson die Abdeckklappe 34 mit dem Nockenteil 48 und dem Fingerbereich 50 gegen die Kraft der Abdeckklappen-Torsionsfeder 46 in Richtung des Pfeils B. Die Querverschiebung des Nockenteils 48 und des Fingerbereichs 50 in Richtung des Pfeils B bewirkt, daß der Fingerbereich 50 quer zur Stabteilachse aus dem Eingriff mit dem Sperrglied 52 herausgeschoben wird. Sobald der Fingerbereich 50 seitlich aus dem Eingriffsbereich des Sperrglieds 52 heraus geschoben ist, ist er frei, um nach unten längsseits des Sperrglieds 52 geschwenkt zu werden. Wenn der Fingerbereich 50 auf diese Weise nach unten geschwenkt wird, schwenkt die Abdeckklappe 34 mit in ihre offene Stellung während sich der Fingerbereich 50 nach unten am Sperrglied 52 vorbei bewegt. Wenn die Abdeckklappe 34 durch die Bedienungsperson in ihre offene Stellung geschwenkt wurde, kann eine Leitungs- oder Gebläseeinrichtung über dem oberen Bereich 16 der Auswurföffnung 14 montiert werden.

Die schlitzförmige Öffnung 54 im Nockenteil 48 liefert einen Spielraum für das Nockenteil 48, damit sich dieses bezüglich des stationären Stabteils 30 in Richtung der Pfeile B und C verschieben läßt. Wenn die Bedienungsperson das Nockenteil 48 in Richtung des Pfeils B verschiebt, verschwenkt sich die Abdeckklappe 34 effektiv leicht um eine vertikale Achse, die durch den Kontaktpunkt zwischen der aufrechtstehenden Halterung 40 und dem Stabteil 30 verläuft. Die Lageröffnung 44 in der aufrechtstehenden Halterung 40 ist etwas größer als das Stabteil 30 und bietet daher genügend Freiraum für die aufrechtstehende Halterung, um diese gegenüber dem Stabteil 30 leicht verschwenken zu können.

Die Abdeckklappen-Torsionsfeder 46 dient zwei Vorspannfunktionen. Die Abdeckklappen-Torsionsfeder 46 versucht einerseits, die Abdeckklappe 34 um das Stabteil 30 in Richtung des Pfeils A in eine geschlossene Stellung zu verschwenken, in der die Abdeckklappe 34 den oberen Bereich 16 der Auswurföffnung 14 bedeckt. Die Abdeckklappen-Torsionsfeder 46 versucht andererseits die Abdeckklappe 34 in Richtung des Pfeils C zu schieben, so daß der Fingerbereich 50 in verriegeltem Eingriff mit dem Sperrglied 52 gehalten wird. Durch ihre Doppelfunktion vereinfacht die Abdeckklappen-Torsionsfeder 46 die Konstruktion, sie reduziert die erforderliche Teilezahl und verringert infolgedessen die Kosten der erfindungsgemäßen Verriegelungseinrichtung 36.

Die vorliegende Erfindung liefert damit einen Mechanismus zur Abdeckung des oberen Bereichs 16 der Auswurföffnung 14 in einem Mähgehäuse 12, sofern das Mähgehäuse 12 von einem Auffangmodus in einen Seitenauswurfmodus umgewandelt wurde. Die Abdeckklappe 34 ist während des Mähbetriebs in ihrer geschlossenen Stellung verriegelt und verhindert damit, daß die Auswurföffnung 14 während des Mähens unbedeckt ist. Um die Auswurföffnung 14 freizumachen, muß die Bedienungsperson den zusätzlichen Schritt der aktiven Querverschiebung der Abdeckklappe 34 ausführen, bevor die Abdeckklappe 34 in eine Stellung angehoben werden kann, in der das Innere des Mähgehäuses 12 und das Mähmesser 20 freigelegt werden. Die vorliegende Erfindung liefert desweiteren eine seitlichen Auswurfklappe, die ein Verschwenken zuläßt, wenn sie auf Hindernisse stößt, um die Gefahr von Beschädigungen der Auswurfklappe 26 und der Hindernisse zu reduzieren. Die Auswurfklappe 26 kann auf diese Weise verschwenkt werden, ohne das Innere des Mähgehäuses 12 zu öffnen oder freizulegen, denn die Abdeckklappe 34 bleibt in ihrer ursprünglichen Lage verriegelt, wenn die Auswurfklappe 26 verschwenkt wird. Der erfindungsgemäße Mechanismus weist eine relativ einfache Konstruktion auf, erfordert relativ wenig Einzelteile und ist relativ preisgünstig herstellbar.

Die bevorzugte Ausgestaltung enthält eine einzige Öffnung 14, welche einen oberen Bereich 16 und einen seitlichen Bereich 22 aufweist, die in zugehörigen Ober- und Seitenwandungen 18 und 24 des Mähgehäuses 12 ausgebildet sind. Die Erfindung schließt jedoch auch beispielsweise zwei getrennte Öffnungen ein, eine in der Oberwandung und eine in der Seitenwandung.

## Patentansprüche

1. Mähgehäuse mit wenigstens einem darin rotierenden Mähmesser (20), mit einer Öffnung (14), die einen direkt über dem Mähmesser (20) liegenden oberen Bereich (16) in der Oberwandung (18) des Mähgehäuses (12) aufweist, desweiteren mit einer über der Öffnung angeordneten Auswurfklappe (26), die sich von der Öffnung (14) aus seitlich nach außen erstreckt und verschwenkbar ist, um beim Auftreffen gegen ein Hindernis während des Mähbetriebs ausschwenken zu können, **dadurch gekennzeichnet, daß** eine Abdeckklappe (34) vorgesehen ist, die den oberen Bereich (16) der Öffnung (14) abdeckt und einen Verriegelungsmechanismus (36) aufweist, der die Abdeckklappe (34) in einer die Öffnung (14) im wesentlichen abdeckenden Stellung arretiert und der verriegelt bleibt, wenn die Auswurfklappe (26) ausschwenkt, wobei der Verriegelungsmechanismus (36) durch eine Bedienungsperson entriegelbar ist, so daß die Abdeckklappe (34) in eine Stellung bewegt werden kann, in der die Öffnung (14) im wesentlichen frei liegt.

2. Mähgehäuse nach Anspruch 1, **dadurch gekennzeichnet, daß** die Öffnung (14) einen seitlichen Bereich (22) in einer Seitenwandung (24) des Mähgehäuses (12) aufweist, derart, daß der seitliche Bereich (22) der Öffnung (14) offen bleibt, um Schnittgut seitlich aus dem Mähgehäuse (12) zu leiten, und daß sich die Auswurfklappe (26) über den seitlichen Bereich (22) der Öffnung (14) hinaus seitlich nach außen erstreckt.

3. Mähgehäuse nach Anspruch 1 oder 2, **dadurch gekennzeichnet, daß** die Auswurfklappe (26) in eine untere Stellung vorgespannt ist.

4. Mähgehäuse nach einem der Ansprüche 1 bis 3, **gekennzeichnet durch** einen Verriegelungsmechanismus (36) mit
- einem Drehteil (30), um das sich die Abdeckklappe (34) zwischen einer offenen und einer geschlossenen Stellung verschwenken läßt,
- einem auf dem Mähgehäuse (12) befestigten Sperrglied (52),
- einem an der Abdeckklappe (34) befestigten Nockenteil (48) mit einem Fingerbereich (50), der an das Sperrglied (52) anstößt, um das Nockenteil (48) und die Abdeckklappe (34) an einem Verschwenken von der geschlossenen in die offene Stellung zu hindern,
- einem Vorspanner (46), der die Abdeckklappe (34) drängt, in die geschlossene Stellung zu schwenken und sich seitlich zu verschieben, und der das Nockenteil (48) in eine Stellung drängt, in welcher der Fingerbereich (50) an das Sperrglied (52) anstößt, um das Nockenteil (48) und die Abdeckklappe (34) an einem Verschwenken in die offene Stellung zu hindern, und
- einer Abdeckklappe (34), die sich **durch** eine Bedienungsperson verschieben läßt, so daß der Fingerbereich (50) den Eingriffsbereich des Sperrglieds (52) verläßt, und es ermöglicht, daß die Bedienungsperson die Abdeckklappe (34) in ihre offenen Stellung schwenkt.

5. Mähgehäuse nach Anspruch 4, **dadurch gekennzeichnet, daß** die Auswurfklappe (26) derart schwenkbar von dem Drehteil (30) getragen wird, daß sie bei auftreffenden Hindernissen während des Mähbetriebs ausschwenken kann.

6. Mähgehäuse nach einem der Ansprüche 1 bis 5, **dadurch gekennzeichnet, daß** die Auswurfklappe (26) durch eine Auswurfklappen-Torsionsfeder (32) nach unten gedrückt wird und daß sich durch die Auswurfklappen-Torsionsfeder (32) ein Drehteil (30) erstreckt.

7. Mähgehäuse nach einem der Ansprüche 4 bis 6, **dadurch gekennzeichnet, daß** sich durch das Nockenteil (48) ein Schlitz (54) erstreckt, der das Drehteil (30) aufnimmt, wobei der Schlitz (54) eine durch die Bedienungsperson veranlaßte Verschiebung des Nockenteils (48) relativ zum Drehteil (30) in eine Stellung ermöglicht, in welcher der Fingerbereich (50) den Eingriffsbereich des Sperrglieds (52) verläßt.

8. Mähgehäuse nach einem der Ansprüche 4 bis 7, **dadurch gekennzeichnet, daß** das Drehteil ein Stabteil (30) ist.

9. Mähgehäuse nach einem der Ansprüche 3 bis 8, **dadurch gekennzeichnet, daß** der Vorspanner eine Torsionsfeder (46) ist.

## Claims

1. A mower housing with at least one mower blade (20) rotating therein, with an opening (14) which has an upper region (16) in the upper wall (18) of the mower housing (12) lying directly above the mower blade (20), further with a discharge flap (26) which is arranged above the opening, extends sideways to the outside from the opening (14) and can pivot, in order to be able to swing clear on encountering an obstacle during mowing operation, **characterized in that** a cover flap (34) is provided and covers the upper region (16) of the opening (14) and has a latch mechanism (36) which arrests the cover flap (34) in a position substantially covering the opening (14) and which remains locked when the discharge flap (26) swings clear, wherein the latch mechanism (36) can be unlocked by an operator, so that the cover flap (34) can be moved into a position in which the opening (14) is substantially exposed.

2. A mower housing according to claim 1, **characterized in that** the opening (14) has a side region (22) in a sidewall (24) of the mower housing (12), such that the side region (22) of the opening (14) remains open, in order to pass cut material sideways out of the mower housing (12), and **in that** the discharge flap (26) extends out sideways beyond the side region (22) of the opening (14).

3. A mower housing according to claim 1 or 2, **characterized in that** the discharge flap (26) is biased into a lower position.

4. A mower housing according to any of claims 1 to 3, **characterized by** a latch mechanism (36) with
- a pivot part (30) about which the cover flap (34) can swing between an open and a closed position,
- a blocking member (52) fixed on the mower housing (12),
- a cam part (48) fixed on the cover flap (34), with a finger region (50) which abuts the blocking member (52), in order to prevent the cam part (48) and the cover flap (34) from turning from the closed into the open position,
- a biasing means (46) which biases the cover flap (34) to turn into the closed position and to shift to the side and which biases the cam part (48) into a position in which the finger region (50) abuts the blocking member (52), in order to prevent the cam part (48) and the cover flap (34) from turning into the open position, and
- a cover flap (34) which can be shifted by an operator, so that the finger region (50) leaves the region of engagement of the blocking member (52) and makes it possible for the operator to turn the cover flap (34) into its open position.

5. A mower housing according to claim 4, **characterized in that** the discharge flap (26) is carried pivotally by the pivot part (30) in such a way that it can swing clear during mowing operation on encountering obstructions.

6. A mower housing according to any of claims 1 to 5, **characterized in that** the discharge flap (26) is biased downwards by a discharge flap torsion spring (32) and **in that** a pivot part (30) extends through the discharge flap torsion spring (32).

7. A mower housing according to any of claims 4 to 6, **characterized in that** a slot (54) extends through the cam part (48) and receives the pivot part (30), wherein the slot (54) enables displacement of the cam part (48) relative to the pivot part (30) caused by the operator, into a position in which the finger region (50) leaves the region of engagement of the blocking member (52).

8. A mower housing according to any of claims 4 to 7, **characterized in that** the pivot part is a rod part (30).

9. A mower housing according to any of claims 3 to 8, **characterized in that** the biasing means is a torsion spring (46).

## Revendications

1. Caisson de coupe pour faucheuse comprenant au moins une lame de coupe (20) entraînée en rotation dans ledit caisson de coupe, une ouverture (14) qui comporte une zone supérieure (16) située directement au-dessus de la lame de coupe (20) et réalisée dans la paroi supérieure (18) du caisson de coupe (12), comprenant en outre une trappe d'éjection (26) disposée au-dessus de l'ouverture (14), laquelle est susceptible de pivoter et s'étend à partir de l'ouverture (14) latéralement vers l'extérieur, afin de pouvoir pivoter vers l'extérieur en cas de heurt contre un obstacle pendant le processus de coupe, **caractérisé en ce qu'**il est prévu un capot (34), qui recouvre la zone supérieure (16) de l'ouverture (14) et comporte un mécanisme de verrouillage (36) qui bloque le capot (34) sensiblement dans une position recouvrant l'ouverture (14) et qui reste verrouillé lorsque la trappe d'éjection (26) pivote vers l'extérieur, le mécanisme de verrouillage (36) pouvant être déverrouillé par une personne de service, de telle sorte que le capot (34) peut être déplacé dans une position dans laquelle l'ouverture (14) est sensiblement dégagée.

2. Caisson de coupe pour faucheuse selon la revendication 1, **caractérisé en ce que** l'ouverture (14) comporte une zone latérale (22) dans la paroi latérale (24) du caisson de coupe (12), de telle sorte que la zone latérale (22) de l'ouverture (14) reste ouverte pour guider le produit coupé latéralement hors du caisson de coupe (12), et **en ce que** la trappe d'éjection (26) s'étend au-dessus de la zone latérale (22) de l'ouverture (14) latéralement vers l'extérieur.

3. Caisson de coupe pour faucheuse selon la revendication 1 ou 2, **caractérisé en ce que** la trappe d'éjection (26) est précontrainte dans une position abaissée.

4. Caisson de coupe pour faucheuse selon une des revendications 1 à 3, **caractérisé par** un mécanisme de verrouillage (36) comprenant :
- une pièce rotative (30), autour de laquelle peut pivoter le capot (34) entre une position d'ouverture et une position de fermeture,
- un organe de blocage (52) fixé sur le caisson de coupe (12),
- une came (48), fixée contre le capot (34) et comprenant une patte (50) qui vient buter contre l'organe de blocage (52), pour empêcher la came (48) et le capot (34) de pivoter de la position de fermeture vers la position d'ouverture,
- un élément de précontrainte (46), qui contraint le capot (34) à pivoter dans la position de fermeture et à coulisser vers le côté, et qui contraint la came (48) dans une position dans laquelle la patte (50) vient en butée contre l'organe de blocage (52), afin d'empêcher que la came (48) et le capot (34) ne pivotent vers la position d'ouverture, et
- un capot (34) qui peut être déplacé par une personne de service, de telle sorte que la patte (50) quitte la zone de prise de l'organe de blocage (52), ce qui permet à la personne de service de faire pivoter le capot (34) vers la position d'ouverture.

5. Caisson de coupe pour faucheuse selon la revendication 4, **caractérisé en ce que** la trappe d'éjection (26) est supportée par la pièce rotative (30) de manière à pouvoir pivoter, de telle sorte que ladite trappe d'éjection peut pivoter vers l'extérieur à chaque heurt contre un obstacle pendant le processus de coupe.

6. Caisson de coupe pour faucheuse selon une des revendications 1 à 5, **caractérisé en ce que** la trappe d'éjection (26) est poussée vers le bas par un ressort à torsion (32) et **en ce qu'**une pièce rotative (30) s'étend à travers le ressort à torsion (32).

7. Caisson de coupe pour faucheuse selon une des revendications 4 à 6, **caractérisé en ce qu'**une fente (54), destinée à recevoir la pièce rotative (30), est réalisée dans la came (48), la fente (54) permettant à une personne de service de faire coulisser la came (48) par rapport à la pièce rotative (30) vers une position dans laquelle la patte (50) quitte la zone de prise de l'organe de blocage (52).

8. Caisson de coupe pour faucheuse selon une des revendications 4 à 7, **caractérisé en ce que** la pièce rotative est une tige (30).

9. Caisson de coupe pour faucheuse selon une des revendications 3 à 8, **caractérisé en ce que** l'élément de précontrainte est un ressort à torsion (46).
